# EUROPEAN PATENT APPLICATION

(11) **EP 4 560 429 A1**
(43) Date of publication of application: **28.05.2025**
(21) Application number: 23843212.4
(22) Date of filing: 30.06.2023
(51) Int. Cl.: G06F 1/16, H01R 13/24

(54) **ELECTRONIC DEVICE INCLUDING HOUSING HAVING THROUGH-HOLE FORMED THEREIN**

(30) Priority: 22.07.2022 KR 20220091298
(71) Applicant: Samsung Electronics Co., Ltd., Suwon-si, Gyeonggi-do 16677 (KR)
(72) Inventor: CHUN, Jungho, Suwon-si, Gyeonggi-do 16677 (KR)
(74) Representative: Gulde & Partner
(86) International application number: PCT/KR2023/009237
(87) International publication number: WO 2024/019361

(57) **Abstract**

According to an embodiment of the present disclosure, an electronic device may be provided, the electronic device comprising: a housing including a first plate, a side member having a thickness of a first width, a seating portion which is a portion of the side member and on which the edge of the first plate can be seated, and a through-hole penetrating from the outer surface toward the inner surface of a designated region of the side member and having a first depth that is substantially the same as the first width; a socket module including a conductive socket, which is inserted into the through-hole and has a first surface exposed to the outside of the housing and has a second surface opposite to the first surface and exposed to the inside of the housing, and an elastic member arranged to surround the periphery of the second surface of the conductive socket and being in contact with the periphery of the through-hole at the inner surface; and a circuit board having arranged thereon a conductive contact member, wherein the circuit board has the conductive contact member arranged to be electrically connected to the circuit board while contacting the second surface of the conductive socket. Various other embodiments may also be applied.

## Description

### [Technical Field]

Various embodiments of the disclosure relate to a housing having a through hole formed therein and an electronic device including the same.

### [Background Art]

Typically, the term "electronic device" may be used to refer to a device that enables communication functions such as voice calls or text messaging, multimedia functions such as music or video playback, and entertainment functions such as games. Such electronic devices may include desktop computers used in the home or office, and may include laptop computers or tablet computers that offer better portability and space utilization in typical use environments, including the home or office.

Inside the housing of a laptop or tablet computer, various components and control circuits, including a display unit, may be accommodated. In addition, input devices such as a keyboard or a power source (e.g., battery) or power supply devices for supplying the power may be electrically connected to the laptop or tablet computer. In this way, for the electrical connection between the electronic device and an external electronic device, the electronic device may be provided with at least one conductive socket.

### [Detailed Description of the Invention]

### [Technical Problem]

Such a conductive socket is generally disposed on a side member of a housing, but as a through hole for disposing a conductive socket is formed in the housing, the rigidity of the housing may be reduced. The reduction in the rigidity of the housing may cause damage to the electronic device when a certain level of load is repeatedly applied to the electronic device or a large load is applied.

The disclosure discloses various embodiments that can reduce the reduction in rigidity even when the through hole in which the conductive socket is arranged is arranged in a side member or other part of the housing.

However, the problems that the disclosure seeks to solve are not limited to the aforementioned problems, and may be expanded in various ways without departing from the spirit and scope of the disclosure.

### [Technical Solution]

According to an embodiment of the disclosure, an electronic device may include a housing including a first plate, a side member having a thickness of a first width, a seating portion as a portion of the side member configured to seat an edge of the first plate thereon, and a through hole formed to penetrate a predetermined area of the side member from an outer surface toward an inner surface and having a first depth substantially equal to the first width, a socket module including a conductive socket inserted into the through hole and comprising a first surface exposed outside the housing and a second surface opposite to the first surface and exposed inside the housing, and an elastic member disposed to surround a periphery of the second surface of the conductive socket to be in contact with the periphery of the through hole on the inner surface, and a circuit board on which a conductive contact member is disposed. The circuit board may be disposed such that the conductive contact member is in contact with the second surface of the conductive socket to be electrically connected to the circuit board.

According to an embodiment of the disclosure, an electronic device may include a housing including a first plate oriented in a first direction, a second plate oriented in a second direction opposite to the first direction, a side member surrounding the space between the first plate and the second plate, the side member including an outer surface oriented in a third direction perpendicular to the first direction and the second direction, and an inner surface opposite to the outer surface, and having a thickness of a first width between the outer surface and the inner surface, a seating portion as a portion of the side member configured to seat an edge of the plate thereon, and a through hole formed to penetrate a predetermined area of the side member from the outer surface toward an inner surface and having a first depth substantially equal to the first width, a socket module including a conductive socket inserted into the through hole and comprising a first surface exposed outside the housing and a second surface opposite to the first surface and exposed inside the housing, and an elastic member disposed to surround a periphery of the second surface of the conductive socket to be in contact with the periphery of the through hole on the inner surface, and a circuit board having one end at which a conductive contact member is disposed. The circuit board may support the conductive contact member such that the conductive contact member is configured to be pressed against the second surface of the conductive socket in a direction from the inner surface toward the outer surface.

Various other embodiments are possible.

### [Advantageous Effects]

According to an embodiment of the disclosure, it is possible to provide an electronic device in which the rigidity of the housing is not reduced even if a through hole exists in the side surface of the housing.

In addition, various effects that are directly or indirectly recognized through this disclosure may be provided.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to an embodiment in a network environment.
FIG. 2 is a front view illustrating an electronic device according to an embodiment.
FIG. 3A is a front perspective view illustrating an electronic device according to an embodiment.
FIG. 3B is a side view illustrating the electronic device according to an embodiment.
FIG. 3C is a side view illustrating the electronic device according to an embodiment.
FIG. 4 is a view illustrating a state in which an electronic device housing according to an embodiment is partially damaged.
FIG. 5 is a cross-sectional view of an electronic device according to some embodiments (comparative embodiments).
FIG. 6 is a view illustrating a second plate and a side member of the electronic device according to some embodiments (comparative embodiments).
FIG. 7 is a view illustrating a recess surrounded by the second plate and the side member of the electronic device according to some embodiments (comparative embodiments).
FIG. 8 is a view illustrating the recess in the electronic device according to some embodiments (comparative embodiments) as viewed from the inside of the housing.
FIG. 9 is a view illustrating a socket module and a circuit board connected to the socket module in the electronic device, according to some embodiments (comparative embodiments).
FIG. 10 is a view illustrating an example of using the socket module and the circuit board connected to the socket module according to some embodiments (comparative embodiments).
FIG. 11A is an internal perspective view illustrating through holes and a recess in the electronic device according to some embodiments (comparative embodiments).
FIG. 11B is a view illustrating a state in which a socket module is mounted in a recess in the electronic device according to some embodiments (comparative embodiments).
FIG. 11C is a view illustrating a state in which the socket module is mounted in the recess in the electronic device in a different direction from the embodiment illustrated in FIG. 11B.
FIG. 11D is a cross-sectional view illustrating a state in which a socket support member is mounted in the recess in the electronic device according to some embodiments (comparative embodiments).
FIG. 11E is a cross-sectional view illustrating a state in which the socket module and the socket support member are mounted in the recess in the electronic device according to some embodiments (comparative embodiments).
FIG. 11F is a view illustrating a state in which the socket module and the socket support member are mounted in the recess in the electronic device according to some embodiments (comparative embodiments).
FIG. 12 is a view illustrating the amount of deformation when a load is applied to through holes and their surroundings in the electronic device, according to some embodiments (comparative embodiments).
FIG. 13 is a cross-sectional view illustrating an electronic device according to an embodiment of the disclosure.
FIG. 14 is an internal perspective view illustrating the electronic device according to an embodiment of the disclosure.
FIG. 15 is a view illustrating a socket module according to an embodiment of the disclosure.
FIG. 16 is a view illustrating a state in which the socket module is mounted in a through hole in the electronic device according to an embodiment of the disclosure.
FIG. 17 is a view illustrating a state in which socket modules are mounted in through holes in the electronic device in a different direction from the embodiment illustrated in FIG. 16.
FIG. 18 is a view illustrating a conductive contact member and a circuit board according to an embodiment of the disclosure.
FIG. 19A is an internal perspective view illustrating through holes in the electronic device according to an embodiment of the disclosure.
FIG. 19B is a view illustrating a state in which conductive contact members and a circuit board are mounted in the electronic device according to an embodiment of the disclosure.
FIG. 19C is a cross-sectional view illustrating a state in which a socket module, a conductive contact member, and a circuit board are mounted in the electronic device according to an embodiment of the disclosure.
FIG. 19D is a view illustrating a state in which a socket module, conductive contact members, and a circuit board are mounted in the electronic device according to an embodiment of the disclosure.
FIG. 20 is a view illustrating the amount of deformation when a load is applied to through holes in the electronic device and their surroundings, according to an embodiment of the disclosure.

Throughout the appended drawings, like reference numerals may be assigned to like components, configurations, and/or structures.

### [Mode for Carrying out the Invention]

The following description made with reference to the appended drawings may be provided in order to help comprehensive understanding of the various implementations of the disclosure defined by the claims and their equivalents. A specific embodiment disclosed in the following description includes various specific details to help understanding, but is considered to be one of various embodiments. Accordingly, it will be apparent to those skilled in the art that various changes and modifications of the various implementations described herein can be made without departing from the scope and spirit of the disclosure. In addition, descriptions of well-known functions and configurations may be omitted for clarity and brevity.

The terms and words used in the following description and claims are not limited to bibliographic meanings, but may be used to clearly and consistently describe various embodiments of the disclosure. Accordingly, it will be apparent to those skilled in the art that the following description of various implementations of the disclosure is provided for illustrative purposes and not intended to limit the scope of the disclosure and its equivalents.

Unless the context clearly indicates otherwise, the singular forms of "a", "an", and "the" should be understood to include the plural meaning. Accordingly, for example, the term "component surface" may refer to one or more surfaces of a component.

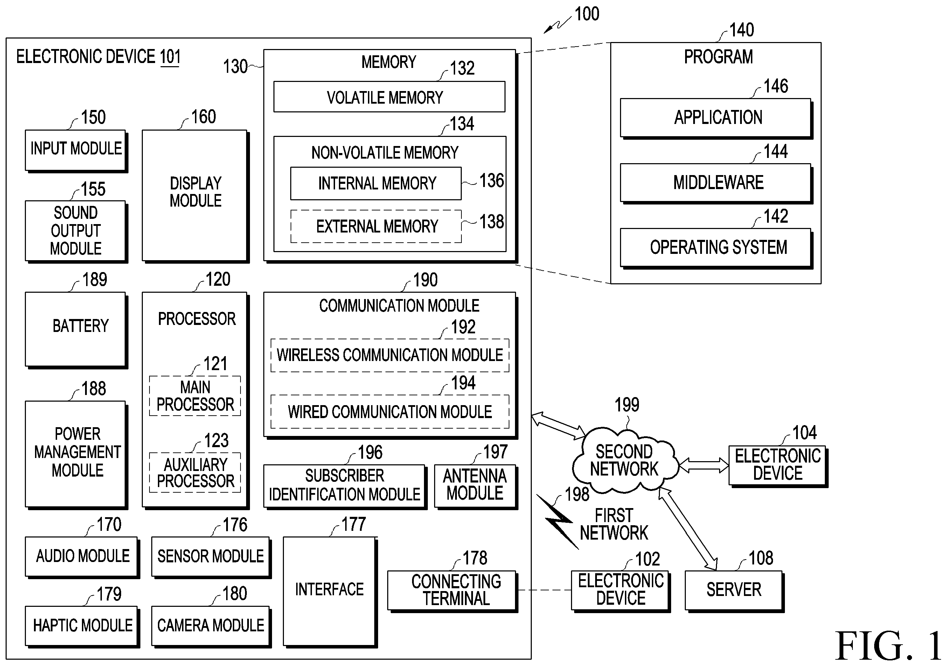

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, **may request** the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

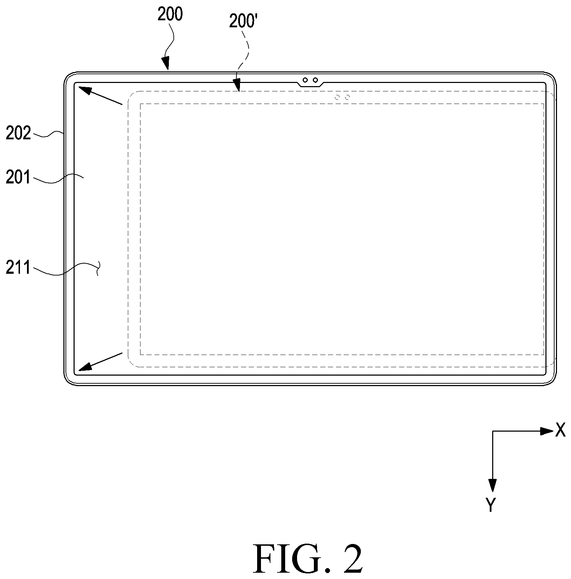

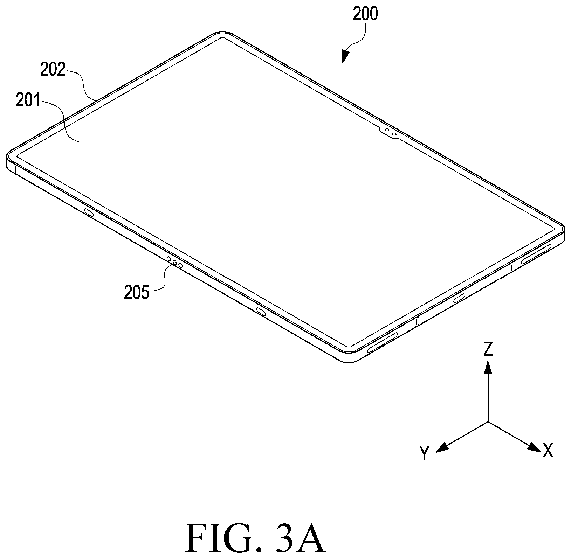

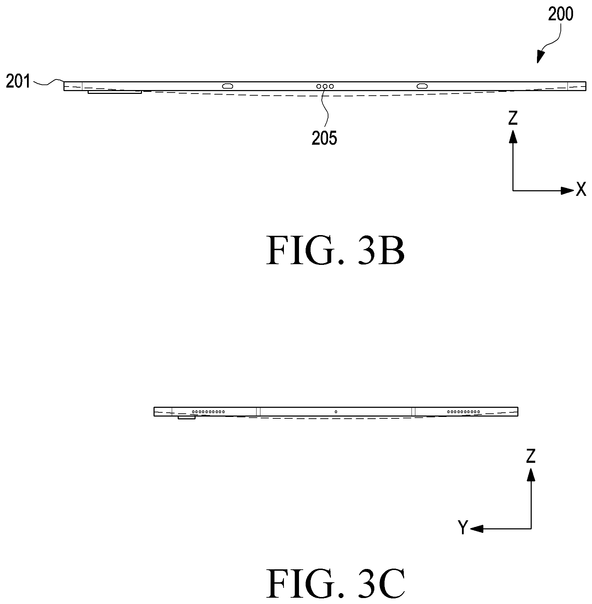

FIG. 2 is a front view illustrating an electronic device 200 according to an embodiment. FIG. 3A is a front perspective view illustrating the electronic device 200 according to an embodiment. FIG. 3B is a side view illustrating the electronic device 200 according to an embodiment. FIG. 3C is a side view illustrating the electronic device 200 according to an embodiment.

In the detailed description below, the vertical width direction of the electronic device 200 may be defined as the "Y-axis direction", the horizontal width direction may be defined as the "X-axis direction", and/or the height direction may be defined as the "Z-axis direction". **In** some embodiments, with respect to the direction in which a component is oriented, "negative/positive (-/+)" may be mentioned along with the orthogonal coordinate system illustrated in the drawings. For example, referring to FIGS. 2 and 3, the "+Z-axis direction" and the "-Z-axis direction" may be indicated together to distinguish between a first direction in which the front surface 211 of the electronic device 200 is oriented and a second direction in which the rear surface (not illustrated) is oriented and which is opposite to the first direction. **In** describing directions, when "negative/positive (-/+)" is not indicated, it may be interpreted as including both the + direction and the - direction unless otherwise defined. That is, the "X-axis direction" may be interpreted as including both the +X direction and the -X direction, and the "Y-axis direction" may be interpreted as including both the +Y direction and the -Y direction. **In** the description of the direction, description "being oriented in one axis among three axes of the Cartesian coordinate system" may include "being oriented in a direction parallel to the one axis. It is noted that this is based on the Cartesian coordinate system indicated in the drawings for brevity of description, and the description of these directions or components does not limit various embodiments of the disclosure.

As illustrated in FIGS. 2 to 3C, the electronic device 200 (e.g., the electronic device 101 in FIG. 1) according to an embodiment may include a housing. The housing may be manufactured in a form in which one side is open, and a display 201 may be placed on the open side of the housing. The display 201 may form the appearance of the electronic device 200 together with the housing.

According to an embodiment, in order to enhance the usability by consumers, the display 201 is required to have as large a screen as possible, while to ensure competitiveness in design, the electronic device is increasingly required to have a slim and thin design. FIG. 2 illustrates an example of an electronic device 200' according to some embodiments of the disclosure and an example of an electronic device 200 according to an embodiment of the disclosure by way of an example, illustrating an example in which the size of the display 201 gradually increases. The display 201 is required to have a large screen as illustrated in FIG. 2, but on the other hand, the thickness of the electronic device 200 may be required to be gradually slimmer. However, when the electronic device has a larger screen and becomes slimmer as described above, the rigidity of the electronic device may be weakened. For example, to make the electronic device have a very small thickness, a material with high rigidity may be used as the material of the housing of the electronic device, or the housing may be formed slimly to have a minimum thickness. In this case, when the electronic device is bent, the housing of the electronic device may be damaged due to the small thickness of the electronic device.

As illustrated in FIG. 3A, a case where a load is applied to an electronic device 200 including a large-screen display 201, for example, a tablet-type electronic device, may be illustrated. A tablet-type electronic device may generally have a rectangular shape including a long side edge and a short side edge with a ratio of about 4.3:3 or 7:5. At this time, the electronic device is illustrated as including a long side edge (e.g., width) and a short side edge(e.g., height) oriented perpendicularly to each other and generally having an angled shape, but it should be noted that at least a portion of the electronic device may include a seamless portion.

When a load is applied to the electronic device 200 having a long side edge(e.g., width) and a short side edge (e.g., height), as illustrated in FIG. 3B, the deformation (indicated by the dotted line) in the long-side direction (e.g., horizontal direction) of the housing may be greater than the deformation (indicated by the dotted line) in the short-side direction (e.g., vertical direction) of the housing as illustrated in FIG. 3C. That is, the electronic device 200 may experience greater deformation along the long side edge of the housing compared to the short side edge of the housing, which may increase the risk of damage. When a through hole 205 for mounting a conductive pin (e.g., a pogo pin) is formed on the long side edge of the housing, a crack may occur around the through hole 205. Therefore, in the design process of the electronic device 200, it may be required to make the long side edge of the housing have greater rigidity since the long side edge of the housing is more susceptible to damage than the short side edge.

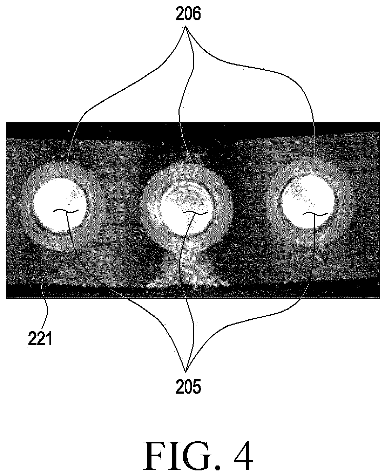

FIG. 4 is a view illustrating a state in which an electronic device housing according to an embodiment is partially damaged. FIG. 4 may illustrate the application of a large load on the housing and the occurrence of a crack around a through hole of the housing.

FIG. 4 illustrates that three through holes 205 are provided in a row on the long side edge of the housing for contact with conductive pins (e.g., pogo pins), and a crack is generated around the through hole 205 in the middle portion among the through holes. FIG. 4 illustrates that three through holes 205 are arranged in a single row, but the number and arrangement of through holes 205 may vary depending on the embodiment. For example, when a low-load (e.g., 15 kgf) external force is repeatedly applied to the housing (e.g., 300 times) or a high-load (e.g., 30 kgf) external force is applied to the housing, cracks may occur around the through holes 205 as illustrated in FIG. 4.

According to an embodiment, a portion of the electronic device housing, for example, a portion of the side member 221, may be formed of a metal material. According to an embodiment, a portion of the side member 221 may be made of a metal material to enhance the beauty of the appearance of the electronic device 200. In addition, a portion of the side member 221 may be made of a metal material to be utilized as a radiator of an antenna (e.g., the antenna module 197 in FIG. 1). According to an embodiment, non-conductive members 206 may additionally be provided around the through holes 205 of the electronic device to surround the through holes 205, respectively.

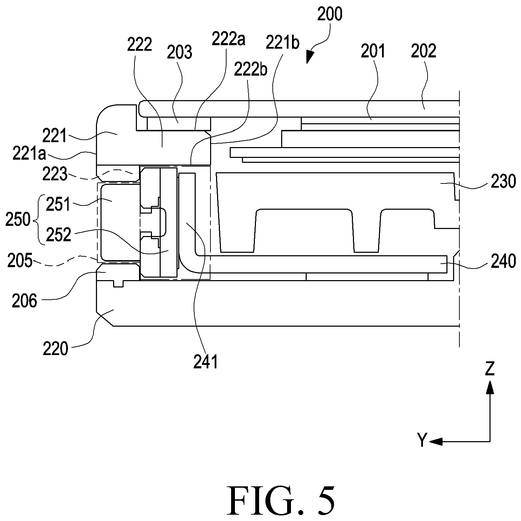

FIG. 5 is a cross-sectional view illustrating an electronic device 200 according to some embodiments (comparative embodiments).

The electronic device 200 may include a housing having a front surface 211 oriented in a first direction (e.g., the Z-axis direction), a rear surface, and a side surface surrounding the space between the front and rear surfaces. The housing may refer to a structure forming some of the front, rear, and side surfaces. According to an embodiment, at least a portion of the front surface may be formed by a substantially transparent first plate 202 (e.g., a glass plate or a polymer plate including various coating layers). The rear surface may be formed by a substantially opaque second plate 220. The second plate 220 may be made of, for example, coated or colored glass, ceramic, polymer, metal (e.g., aluminum, stainless steel (STS), or magnesium), or a combination of two or more of these materials. The side surface may be defined by a side member (or a side bezel structure) 221 coupled to the first plate 202 and the second plate 220 and including metal and/or polymer. **In** some embodiments, the second plate 220 and the side member 221 may be integrally configured and may include the same material (e.g., a metal material such as aluminum).

In the illustrated embodiment, the first plate 202 is illustrated as generally having a flat plate shape oriented in the first direction (e.g., the Z-axis direction), but is not necessarily limited thereto, and may have a shape that seamlessly extends by being bent from the front surface toward the second plate 220.

According to an embodiment, the electronic device 200 may include at least one of a display 201, an audio module (not illustrated), a sensor module (not illustrated), a camera module (not illustrated), a key input device (not illustrated), a light-emitting element (not illustrated), and a through hole 205. Here, the through hole 205 may correspond to a connector hole into which at least one connector is inserted. In some embodiments, in the electronic device 200, at least one of the components (e.g., the key input device or the light-emitting element) may be omitted, or other components may be additionally included.

The display 201 may be exposed through, for example, a substantial portion of the first plate 202. **In** some embodiments, the edges of the display 201 may be configured to be substantially the same as the peripheral shape of the first plate 202 adjacent thereto. **In** another embodiment, the distance between the outer periphery of the display 201 and the outer periphery of the first plate 202 may be configured to be substantially constant in order to enlarge the exposed area of the display 201.

**In** another embodiment (not illustrated), recesses or openings may be provided in a portion of a screen display area of the display 201, and at least one of an audio module, a sensor module, a camera module, and a light-emitting element may be aligned with the recesses or the openings. **In** another embodiment (not illustrated), the rear surface of the screen display area of the display 201 may include at least one of an audio module, a sensor module, a camera module, a fingerprint sensor, and a light-emitting element. **In** another embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen.

In the illustrated embodiment, the display 201 may be disposed on the rear surface of the first plate 202, and as the first plate 202 is seated on the housing (e.g., the side member 221) of the electronic device 200, the display 201 may be disposed in the inner space of the electronic device 200.

The through hole 205 may be, for example, named a connector hole, and may include a hole in which a connector (e.g., a USB connector) for transmitting and receiving power, audio signals, and/or data to and from an external electronic device or a conductive pin (e.g., a conductive pin of a keyboard) for transmitting and receiving at least one input signal may be accommodated. Hereinafter, a conductive pin is exemplified as a component fastened to the through hole 205, but the component coupled to the through hole 205 may also include a connector in addition to the conductive pin.

Referring to FIG. 5, the electronic device 200 may include, in addition to the display 201, the first plate 202, the second plate 220, and the side member 221, a support member 230, a printed circuit board, a battery, and an antenna. **In** some embodiments, in the electronic device 200, at least one of the components (e.g., the support member 230) may be omitted, or other components may be additionally included.

The support member 230 may be disposed inside the electronic device 200, and may be connected to the side member 221 or may be integrally formed with the side surface member 221. The support member 230 may be made of, for example, a metal material and/or a non-metal (e.g., polymer) material. The support member 230 may include one surface to which the display 201 is coupled and the other surface to which a printed circuit board is coupled. On the printed circuit board, a processor, memory, and/or an interface may be mounted. The processor may include, for example, one or more of a central processing unit, an application processor, a graphics processing unit, an image signal processor, a sensor hub processor, or a communication processor. The memory may include, for example, volatile memory or non-volatile memory. The interface may include, for example, a high-definition multimedia interface (HDMI), a universal serial bus (USB) interface, an SD card interface, and/or an audio interface. For example, the interface may electrically or physically connect the electronic device 200 to an external electronic device, and include a USB connector, an SD card/MMC connector, or an audio connector.

The battery is a device for supplying power to at least one component of the electronic device 200, and may include, for example, a non-rechargeable primary battery, a rechargeable secondary battery, or a fuel cell. At least a portion of the battery may be disposed on substantially the same plane as, for example, the printed circuit board. The battery may be integrally disposed inside the electronic device 200, or may be detachably disposed on the electronic device 200.

The antenna may include, for example, a near-field communication (NFC) antenna, a wireless charging antenna, and/or a magnetic secure transmission (MST) antenna. The antenna may, for example, perform short-distance communication with an external device, or wirelessly transmit and receive power required for charging. In another embodiment, an antenna structure may be constituted with a portion of the side member 221 and/or a portion of the support member 230, or a combination thereof.

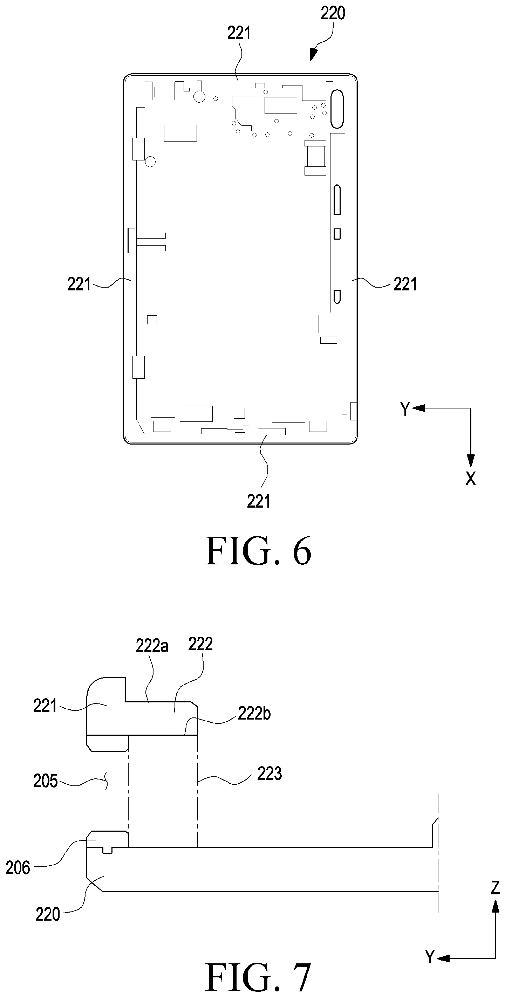

FIG. 5 is a view illustrating the electronic device 200 according to some embodiments (comparative embodiments), in which the socket module 250 is mounted in the through hole 205 and the socket support member 240 is disposed to support the socket module 250. FIG. 6 is a view illustrating a second plate 220 and a side member 221 of an electronic device according to some embodiments (comparative embodiments).

Referring to FIG. 5 and FIG. 6 together, the side member 221 may include an outer surface 221a exposed outside the housing and an inner surface 221b exposed inside the housing, and may include a top surface 221c between the outer surface 221a and the inner surface 221b. The top surface 221c may be a flat portion oriented in the first direction (e.g., the Z-axis direction), and may form a predetermined step difference relative to a stepped portion formed at the end of the side member 221. The side member 221 may include, as a portion thereof, a seating portion 222 on which the edge of the first plate 202 may be seated. The seating portion 222 is a portion that protrudes from the side member 221 to the inside of the housing by a predetermined thickness, and may form at least a portion of the top surface 221c and/or the inner surface 221b of the side member 221. According to an embodiment, the seating portion 222 may have a concave/convex shape, and may be used as a rack mounting portion for anodizing and/or as an electrical conduction path. According to an embodiment, the seating portion 222 may be provided to increase the rigidity of the housing or to vary the internal and external shapes through a press, injection molding, and/or a CNC process. At least a portion of the edge of the first plate 202 may be seated on the seating portion 222. As illustrated in FIG. 5, the edge of the first plate 202 may be seated on the top surface 221c of the side member 221 via an adhesive member 203.

The through hole 205 may be formed to penetrate a predetermined area of the side member from the outer surface 221a toward the inner surface 221b. Here, the designated area may be, for example, the central portion of a long side edge among the long and short side edges of the electronic device. The socket module 250 may be inserted into the through hole 205. The socket module 250 may be coupled in a state of being fitted into the through hole 205. At least one conductive pin may be fastened to the socket module 250, and the conductive pin may be a pogo pin. The pogo pin may be, for example, a spring pin having a generally pointed end and having a cylindrical shape, and may be a component for supplying power to an electronic device or electrically connecting another external component (e.g., a keyboard). The socket module 250 may be a component having a cavity formed in an inner central portion for fastening a conductive pin. For example, in FIG. 5, the socket module 250 according to some embodiments (comparative embodiments) may include a conductive socket 251 that is in contact with a conductive pin and a circuit board 252. The conductive socket 251 may include a material having high electrical conductivity, such as copper or brass. According to some embodiments (comparative embodiments), the circuit board 252 may have a larger cross-sectional area than the conductive socket 251 and may be mounted inside the housing in a stepped form while being coupled with the conductive socket 251. For example, the socket module 250 in which the conductive socket 251 and the circuit board 252 are coupled may be disposed in a form in which a portion (e.g., the conductive socket 251) is inserted into the through hole 205 and the other portion (e.g., the circuit board 252) is supported by being in contact with the inner surface 221b of the side member 221. According to an embodiment, the side member 221 may include a non-conductive member 206 surrounding the conductive socket 251 when the conductive socket 251 is inserted into the through hole 205 for insulation between the conductive socket 251 and the side member 221. When the conductive socket 251 is inserted into the through hole 205, the non-conductive member 206 may be disposed around the conductive socket 251 for insulation between the side member 221 formed of a metal material and the socket module 250.

According to some embodiments (comparative embodiments), the electronic device 200 may include a socket support member 240 to support the socket module 250 from the inside of the housing. The socket support member 240 may be a flat member, such as a SUS plate, and may support a surface facing the inside of the housing of the socket module 250. According to some embodiments, an end of the socket support member 240, for example, a portion that comes into contact with a surface facing the inside of the housing of the socket module 250, may be bent in an "L" shape to cover a significant portion of the surface facing the inside of the housing of the socket module 250. When covering a significant portion of the surface facing the inside of the housing of the socket module 250, the socket support member 240 may be disposed in the space between the socket module 250 and the anti-slip rib 224. By including the socket support member 240, when the conductive pin is inserted into the socket module 250, the socket module 250 may be prevented from being pushed inwardly in the housing (e.g., in a direction opposite to the Y-axis direction) and/or removed from the recess 223.

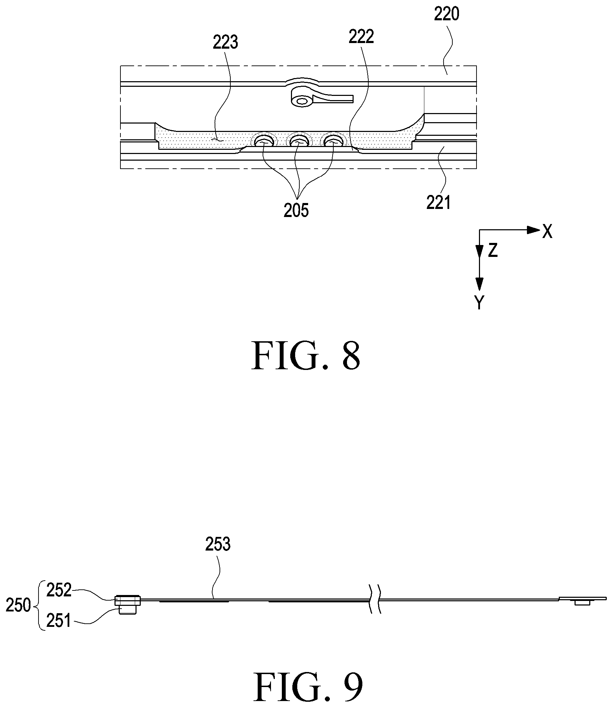

FIG. 7 is a view illustrating a recess 223 surrounded by the second plate 220 and the side member 221 of the electronic device 200 according to some embodiments (comparative embodiments). FIG. 8 is a view illustrating the recess 223 in the electronic device 200 according to some embodiments (comparative embodiments) as viewed from the inside of the housing.

Referring to FIGS. 7 and 8 together, the electronic device 200 may include the recess 223 surrounded by the second plate 220 and the side member 221. In the recess 223, the circuit board 252 of the socket module 250 and the socket support member 240 may be disposed.

According to some embodiments (comparative embodiments), the recess 223 may be formed as a portion formed under the seating portion 222 and may be provided in the form of an opening extending from the through holes 205. **In** order to form the recess 223, for example, it may be necessary to cut the lower portion of the seating portion 222 through a CNC process. As a method of cutting the lower portion of the seating portion 222, for example, under-cut processing and/or T-cut processing may be performed.

According to some embodiments (comparative embodiments), due to the formation of the recess 223, an additional process (e.g., CNC process) should be performed in addition to the process of forming the seating portion 222. At this time, the width of the side member 221 at the position (height) where the through holes 205 are formed may be narrowed by the depth of the recess 223 (e.g., 1.5 mm to 1.7 mm).

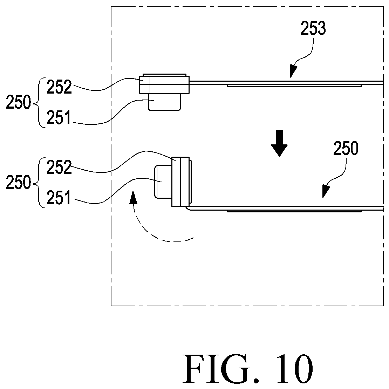

FIG. 9 is a view illustrating the socket module 250 of the electronic device 200 and a circuit board 253 connected to the socket module 250 according to some embodiments (comparative embodiments). FIG. 10 is a view illustrating an example of using the socket module 250 and the circuit board 253 connected to the socket module 250 according to some embodiments (comparative embodiments).

Referring to FIGS. 9 and 10, the socket module 250 may be connected to a separate circuit board 253 in addition to the circuit board 252 included in the socket module 250. The circuit board 253 may be, for example, a flexible printed circuit board (FPCB) and may be disposed on the inner surface of the second plate 220 of the electronic device 200 to electrically connect the socket module 250 to other components (e.g., a processor) within the electronic device 200.

Referring to FIG. 10, the circuit board 253 connected to the socket module 250 may be bent in an "L" shape such that the socket module 250 can be inserted into the through holes 205 and the recess 223 of the side member 221 without interfering with other structures (e.g., the seating portion 222) when mounted inside the housing of the electronic device.

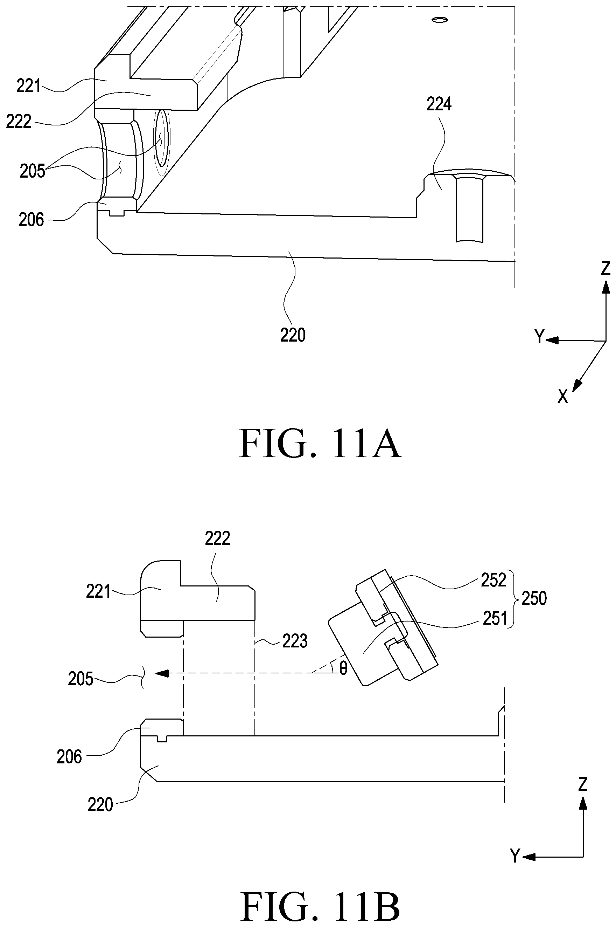

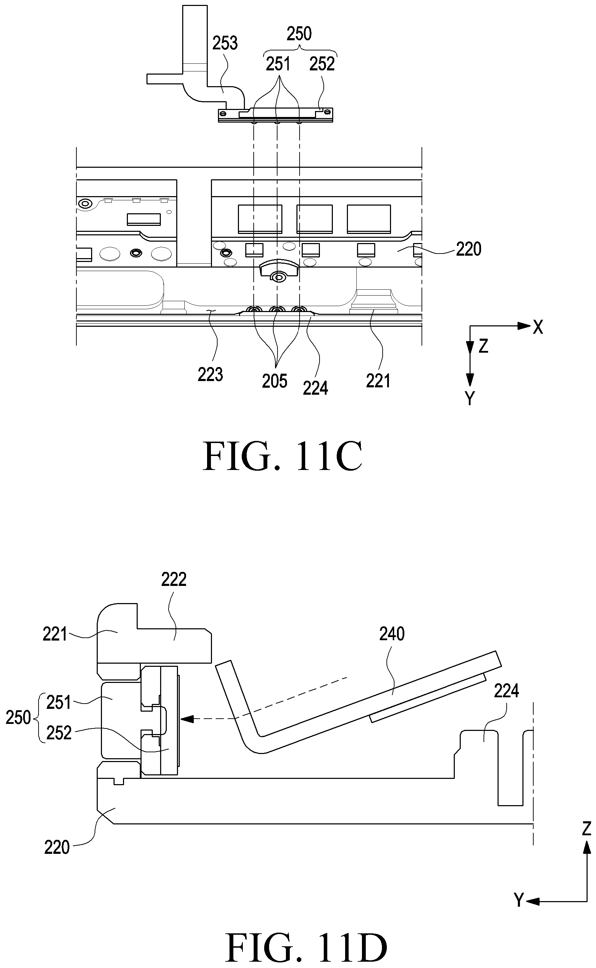

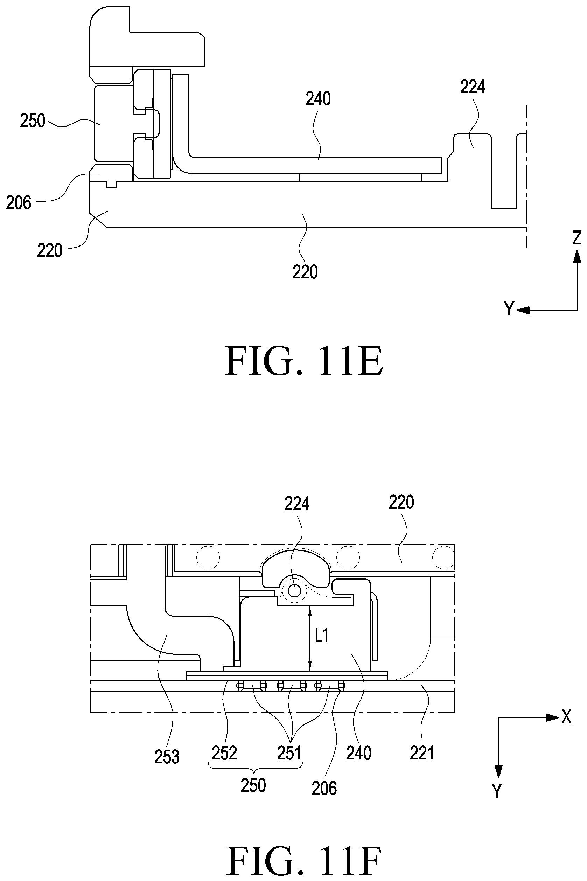

FIG. 11A is an internal perspective view illustrating through holes 205 and a recess 223 in the electronic device 200 according to some embodiments (comparative embodiments). FIG. 11B is a view illustrating a state in which a socket module 250 is mounted in a recess 223 in the electronic device 200 according to some embodiments (comparative embodiments). FIG. 11C is a view illustrating a state in which the socket module 250 is mounted in the recess 223 in the electronic device 200 in a different direction from the embodiment illustrated in FIG. 11B. FIG. 11D is a cross-sectional view illustrating a state in which a socket support member 240 is mounted in the recess 223 in the electronic device 200 according to some embodiments (comparative embodiments). FIG. 11E is a cross-sectional view illustrating a state in which the socket module 250 and the socket support member 240 are mounted in the recess 223 in the electronic device 200 according to some embodiments (comparative embodiments). FIG. 11F is a view illustrating a state in which the socket module 250 and the socket support member 240 are mounted in the recess in the electronic device according to some embodiments (comparative embodiments).

FIG. 11A illustrates a state in which the recess 223 is additionally formed in the side member 221 in which the through holes 205 are formed. Referring to FIG. 11A, in the state in which the socket module 250 and the socket support member 240 are not mounted, it may be confirmed that the portion of the side member 221 in which the through holes 205 are formed has a considerably smaller thickness than other portions due to the formation of the recess 223. Hereinafter, a method of assembling the socket module 250 and the socket support member 240 into the through hole (205) and the recess 223 will be described in detail with reference to FIGS. 11B to 11F.

Referring to FIGS. 11B and 11C, when mounting the socket module 250 in the electronic device 200, the socket module 250 may need to be inserted from the inside of the housing rather than from the outside of the housing (hereinafter, referred to as "internal insertion"). In other words, the conductive socket 251 of the socket module 250 may be inserted into the through hole 205 while facing the outer surface 221a of the side member 221 from the inner surface 221b of the side member 221. In the process of assembling the socket module 250 into the electronic device 200, the socket module 250 may be mounted obliquely at a predetermined angle θ with respect to the first through holes 205.

Referring to FIGS. 11D and 11E, the socket support member be assembled in the state in which the portion bent in the "L" shape faces the outside of the housing, and at this time, the socket support member 240 may also be inserted obliquely at a predetermined angle θ with respect to the recess 223.

Referring to FIGS. 11A to 11F together, the electronic device 200 including the socket module 250 and the socket support member 240 according to some embodiments (comparative embodiments) may have the following problems due to its shape. First, separate processing (e.g., CNC processing) should be performed to form the recess under the seating portion 222, which may also result in reduction of the thickness of the side member 221 around the through holes 205 and thus weakening of the rigidity of the electronic device 200. In addition, according to some embodiments (comparative embodiments), the electronic device 200 may require a separate socket support member 240 because, during the insertion of the conductive pin into the socket module 250, the socket module may be pushed in the inward direction of the housing (e.g., a direction opposite to the Y-axis direction) or removed from the through holes 205. In addition, according to some embodiments (comparative embodiments), when inserting the socket module 250 into the through holes 205, the electronic device 200 may require a separate operation of bending the socket module 250 by 90 degrees to have an "L" shape with respect to the circuit board 253. In addition, according to some embodiments (comparative embodiments), when the electronic device 200 is manually assembled by a user with the socket module 250 and the socket support member 240 from the inside of the housing, the through holes 205 and the recess 223 may be obscured from view and the socket module 250 and the socket support 240 may not be easily guided. As a result, the socket module 250 and/or the socket support member 240 may be incorrectly assembled into the through holes 205 and/or the recess 223, respectively. In addition, according to some embodiments (comparative embodiments), in the electronic device 200, since the socket support member 240 is inserted obliquely during assembly, it may be necessary to ensure a space of a considerable length L1 between the socket module 250 and an anti-slip rib 224 to prevent interference during the assembly process.

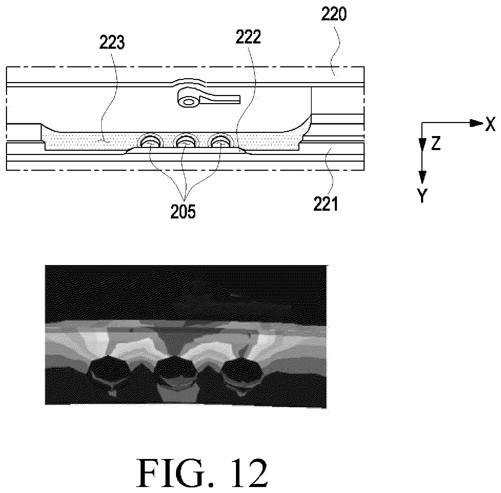

FIG. 12 is a view illustrating the amount of deformation when a load is applied to through holes and their surroundings in the electronic device, according to some embodiments (comparative embodiments).

According to some embodiments (comparative embodiments), the electronic device 200 may undergo deformation to be partially bent when subjected to a load, as observed in FIGS. 3B and 3C. In particular, a greater deformation may occur in the side member 221 around the through holes 205 and the recess 223. For example, FIG. 12 illustrates the level of the strain when a load of about 20 kgf is applied to the electronic device 200. As illustrated, it may be confirmed that the strain is concentrated in the side member 221 around the through holes 205 and the recess 223.

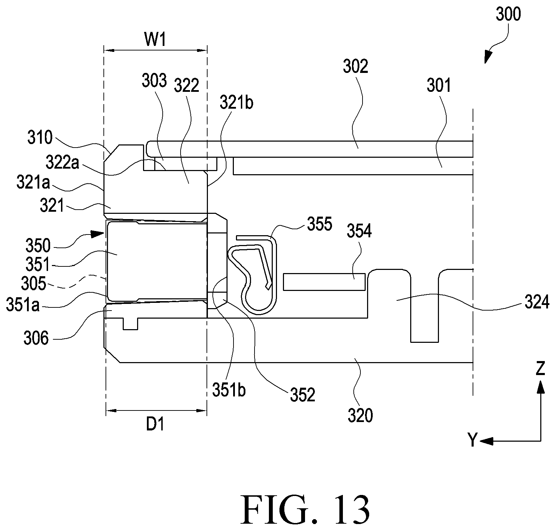

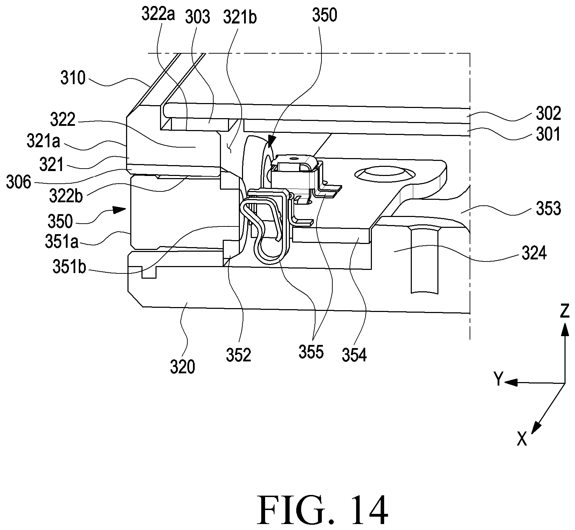

FIG. 13 is a cross-sectional view illustrating an electronic device 300 according to an embodiment of the disclosure. FIG. 14 is an internal perspective view illustrating the electronic device 300 according to an embodiment of the disclosure.

At least one of the components of the electronic device 300 (e.g., a display 301, a first plate 302, and a rear plate 320) may be the same as or similar to at least one of the components of the electronic device 200 of FIGS. 5 to 12, and redundant descriptions will be omitted below.

FIGS. 13 and 14 relate to the electronic device 300 according to an embodiment of the disclosure and illustrate a state in which a socket module 350 is mounted in a through hole 305, and a circuit board 354 is disposed to support the socket module 350.

Referring to FIG. 13 and FIG. 14 together, a side member 321 may include an outer surface 321a exposed outside the housing and an inner surface 321b exposed inside the housing, and may include a top surface 321c between the outer surface 321a and the inner surface 321b. The top surface 321c may be a flat portion oriented in the first direction (e.g., the Z-axis direction), and may form a predetermined step difference relative to a stepped portion formed at the end of the side member 321. The side member 321 may include, as a portion thereof, a seating portion 322 on which the edge of the first plate 302 may be seated. The seating portion 322 is a portion that protrudes from the side member 321 to the inside of the housing by a predetermined thickness, and may form at least a portion of the top surface 321c and the inner surface 321b of the side member 321. According to an embodiment, the seating portion 322 may have a concave/convex shape, and may be used as a rack mounting portion for anodizing and/or as an electrical conduction path. According to an embodiment, the seating portion 322 may be provided to increase the rigidity of the housing or to vary the internal and external shapes through a press, injection molding, and/or a CNC process. At least a portion of the edge of the first plate 302 may be seated on the seating portion 322. As illustrated in FIG. 5, the edge of the first plate 302 may be seated on the top surface 321c of the side member 321 via an adhesive member 303. According to the embodiment illustrated in FIGS. 13 and 14, the side member 321 may have a thickness of the first width W1. The electronic device 300 according to an embodiment of the disclosure does not includes a recess 223 formed under the seating portion 222 unlike the electronic device 200 according to the comparative embodiment of FIGS. 5 to 13. Therefore, the electronic device 300 according to an embodiment of the disclosure may have a side member 321 having a larger width around the through hole 305 compared to the electronic device 200 according to the comparative embodiment of FIGS. 5 to 13.

The through hole 305 may be formed to penetrate a predetermined area of the side member from the outer surface 321a toward the inner surface 321b. Here, the designated area may be, for example, the central portion of a long side edge among the long and short side edges of the electronic device. At this time, the through hole 305 may have a first depth D1 substantially the same as the first width W1 of the side member 321. The socket module 350 may be inserted into the through hole 305. The socket module 350 may be coupled in a state of being fitted into the through hole 305. At least one conductive pin may be fastened to the socket module 350, and the conductive pin may be a pogo pin. The pogo pin may be, for example, a spring pin having a generally pointed end and having a cylindrical shape, and may be a component for supplying power to an electronic device or electrically connecting another external component (e.g., a keyboard). The socket module 350 may be a component having a cavity formed in an inner central portion for fastening a conductive pin. As illustrated in FIGS. 13 and 14, according to an embodiment of the disclosure, the socket module 350 may include a conductive socket 351 that comes into contacts with a conductive pin and an elastic member 352 disposed to surround the conductive socket 351. When the socket module 350 is mounted in the through hole 305, the elastic member 352 may come into contact with the periphery of the through hole 305 (e.g., the inner surface 321b of the side member 321). According to an embodiment, the side member 321 may include a non-conductive member 306 surrounding the conductive socket 351 when the conductive socket 351 is inserted into the through hole 305 for insulation between the conductive socket 351 and the side member 321. When the conductive socket 351 is inserted into the through hole 305, the non-conductive member 306 may be disposed around the conductive socket 351 for insulation between the side member 321 formed of a metal material and the socket module 350.

The electronic device 300 according to an embodiment of the disclosure may include a circuit board 354 on which a conductive contact member 355 is disposed. Here, the circuit board 354 may electrically connect the socket module 350 to other components (e.g., a processor) within the electronic device 300 like the circuit board 353 disposed in the electronic device 200 according to the embodiment of FIGS. 5 to 12, while supporting the socket module 350 like the socket support member 240 disposed in the electronic device 200 of the embodiments of FIGS. 5 to 12. According to an embodiment, the circuit board 354 may support the socket module 350 indirectly rather than directly. For example, the circuit board 354 may support the conductive contact member 355 such that the conductive contact member 355 presses one surface (e.g., the second surface 351b) of the conductive socket 351 in a direction from the inner surface 321b of the housing toward the outer surface 321a. By including the circuit board 354, the electronic device 300 according to an embodiment of the disclosure may omit the socket support member 240 disposed in the electronic device 200 according to the embodiment of FIGS. 5 to 12. The conductive contact member 355 may be disposed at an end of the circuit board 354. At this time, the circuit board 354 may be disposed such that the conductive contact member 355 comes into contact with a surface (e.g., the second surface 351b) facing the inside of the housing of the conductive socket 351 to be electrically connected to the circuit board 354. The circuit board 354 may be disposed in the space between the socket module 350 and the anti-slip rib 324.

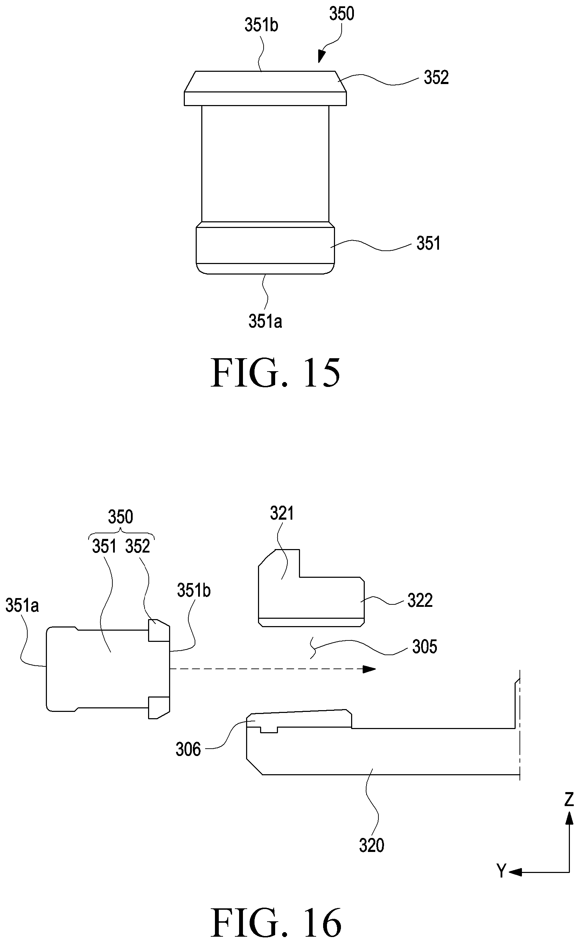

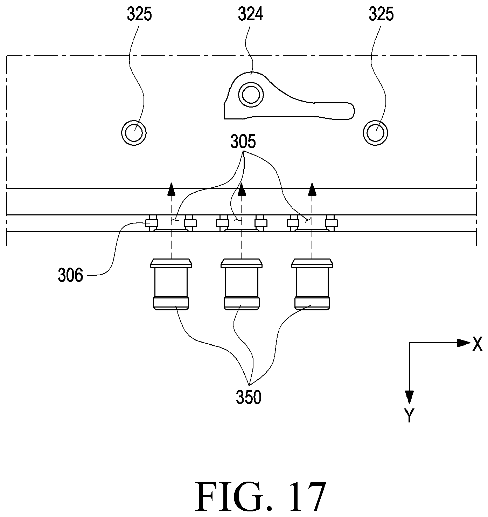

FIG. 15 is a view illustrating a socket module 350 according to an embodiment of the disclosure. FIG. 16 is a view illustrating a state in which the socket module 350 is mounted in a through hole 305 in the electronic device 300 according to an embodiment of the disclosure. FIG. 17 is a view illustrating a state in which socket modules 350 are mounted in through holes 305 in the electronic device 300 in a different direction from the embodiment illustrated in FIG. 16.

Referring to FIG. 15, the socket module 350 may include a conductive socket 351 having a first surface 351a and a second surface 351b opposite to the first surface, and an elastic member 352 disposed to surround the periphery of the second surface 351b of the conductive socket 351. The conductive socket 351 may include a material with high electrical conductivity, such as copper or brass, and the elastic member 352 may include a urethane material. When the socket module 350 is mounted in the through hole 305, the first surface 351a of the conductive socket 351 may be exposed outside of the housing of the electronic device 300, and the second surface 351b opposite to the first surface 351a may be exposed inside the housing. The elastic member 352 may be disposed to surround the periphery of the second surface 351b of the conductive socket 351 such that when the socket module 350 is mounted in the through hole 305, the inner surface 321b of the side member 321 may come into contact with the periphery of the through hole 305.

Referring to FIGS. 16 and 17, the socket modules 350 may be inserted and coupled into the through holes 305 in a direction from the outer surface 321a of the side member 321 toward the inner surface 321b (e.g., in a direction opposite to the Y-axis direction) (hereinafter, referred to as "external insertion"). When the socket modules 350 are inserted into the through holes 305, the first surfaces 351a of the conductive sockets 351 may be mounted in a state in which the first surfaces 351a of the conductive sockets 351 face the outside of the housing and the centers of the second surfaces 351b are aligned toward the centers of the through holes 305. After the socket modules 350 are mounted in the through holes 305, the elastic members 352 included in the socket modules 350 may act as steps to prevent the socket modules 350 from being removed from the through holes 305. According to an embodiment, in order to prevent the socket modules 350 from being removed, the through holes 305 may each be formed in a tapered shape in which its diameter symmetrically decreases from the outer surface to the inner surface about the imaginary line drawn from the outer surface to the inner surface (e.g., the arrow indicating the direction in which each socket module 350 is inserted in FIG. 16).

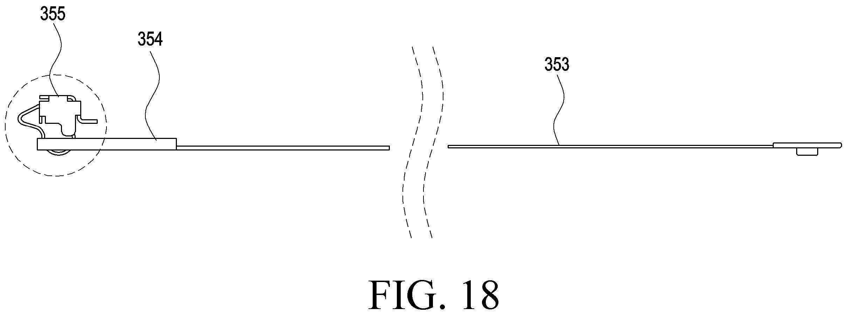

FIG. 18 is a view illustrating a conductive contact member 355 and a circuit board 354 according to an embodiment of the disclosure.

Referring to FIG. 18, the socket module 350 may be connected to a separate circuit board 353 in addition to the circuit board 354 having the conductive contact member 355 disposed at an end. The circuit board 353 may be, for example, a flexible printed circuit board (FPCB) and may be disposed on the inner surface of the second plate 320 of the electronic device 300 to electrically connect the socket module 350 to other components (e.g., a processor) within the electronic device 300.

According to an embodiment of the disclosure, the circuit board 354 may be mounted inside the housing of the electronic device in a non-bent state, unlike the circuit board 253 included in the electronic device 200 of FIGS. 5 to 12. The conductive contact member 355 disposed at the end of the circuit board 354 may be formed as a c-clip. The conductive contact member 355 formed as the c-clip may have a structure capable of being elastically compressed when pressed toward the outside of the housing (e.g., in the Y-axis direction) and capable of being restored to its original state when the pressing force is released. However, the type of the conductive contact member 355 is not limited thereto. For example, the conductive contact member 355 may also be formed as a conductive sponge (e.g., a gasket).

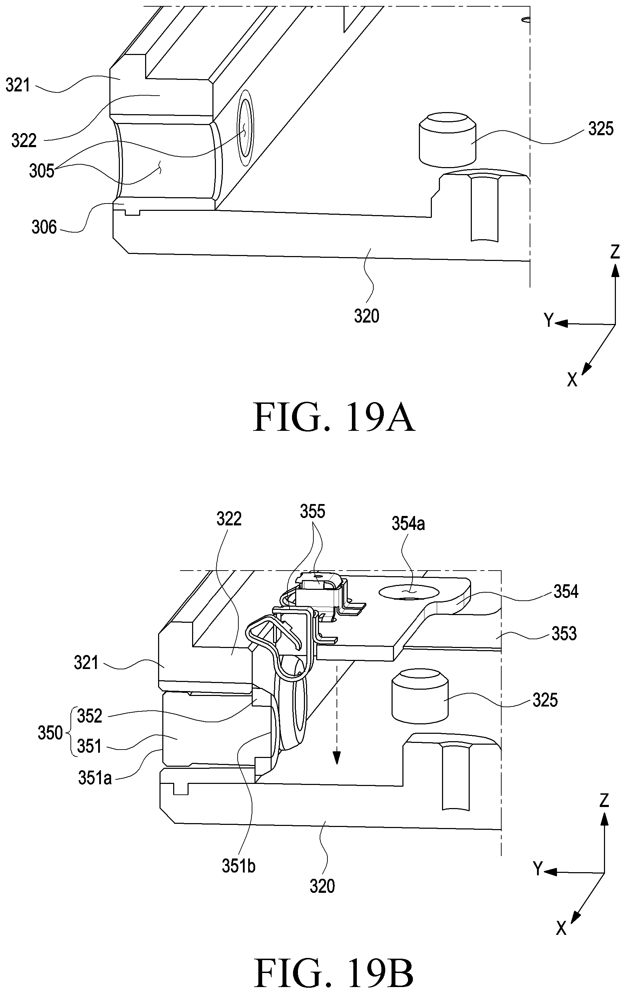

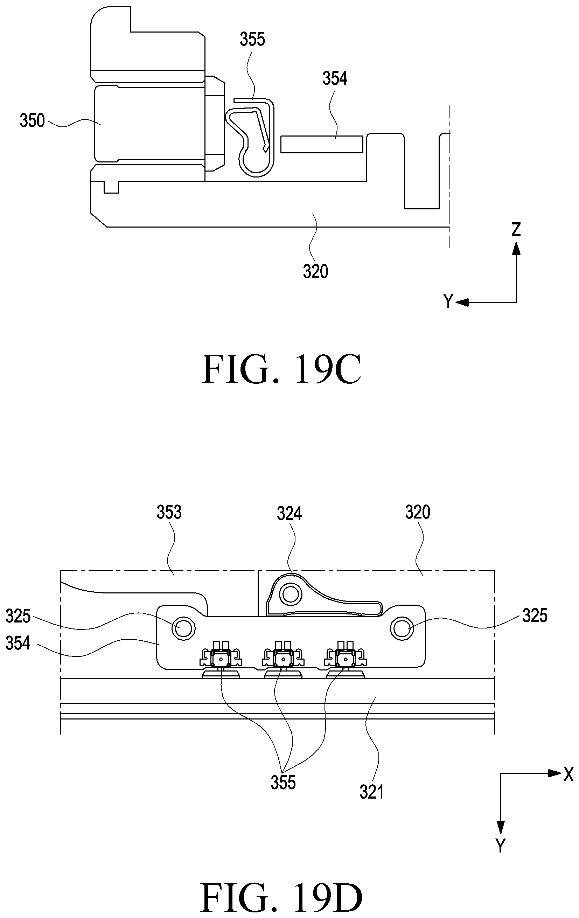

FIG. 19A is an internal perspective view illustrating through holes 305 in the electronic device 300 according to an embodiment of the disclosure. FIG. 19B is a view illustrating a state in which conductive contact members 355 and a circuit board 354 are mounted in the electronic device 300 according to an embodiment of the disclosure. FIG. 19C is a cross-sectional view illustrating a state in which a socket module 350, a conductive contact member 355, and a circuit board 354 are mounted in the electronic device 300 according to an embodiment of the disclosure. FIG. 19D is a view illustrating a state in which a socket module 350, conductive contact members 355, and a circuit board 354 are mounted in the electronic device 300 according to an embodiment of the disclosure.

In FIG. 19A, a side member 321 having through holes 305 formed therein is illustrated. Unlike the electronic device 200 illustrated in FIG. 11A, it may be confirmed that the electronic device 300 illustrated in FIG. 19A does not have a recess. Referring to FIG. 19A, it may be confirmed that the side member 321 according to an embodiment of the disclosure has a considerably larger thickness than the side member 221 of the electronic device 200 illustrated in FIG. 11A. Hereinafter, a method of assembling a socket module 350 and a circuit board 354 supporting the same according to an embodiment of the disclosure will be described in detail with reference to FIGS. 19B to 19D.

As previously described with reference to the embodiment of FIGS. 16 and 17, the socket module 350 according to an embodiment of the disclosure may be inserted from the outside of the housing (external insertion). In the external insertion state of the socket module 350, referring to FIGS. 19B and 19C, the circuit board 354 may be assembled in a direction opposite to the direction in which the first plate 302 is oriented. When the assembly of the circuit board 354 is completed, the circuit board 354 may be disposed at the same height as the second surface 351b of the conductive socket 351. At this time, the conductive contact member 355 disposed at the end of the circuit board 354 may come into contact with the second surface 351b of the conductive socket 351 while being assembled in a direction opposite to the direction in which the first plate 302 is oriented. According to an embodiment of the disclosure, the circuit board 354 including the conductive contact member 355 may be inserted and mounted in a direction perpendicular to the through hole 305 rather than being mounted obliquely with respect to the through hole 305. According to an embodiment, when the mounting of the circuit board 354 is completed, the circuit board 354 may be disposed between the socket module 350 and the anti-slip rib 324. In this structure, the circuit board 354 may be stably connected to the socket module 350 without having a structure that is bent in an "L" shape, in the case of the electronic device 200 of FIGS. 5 to 12.

According to another embodiment, at least one opening 354a is formed in the circuit board 354, and this opening 354a may be fastened to the protrusion 325 protruding from the inner surface of the second plate 320 of the electronic device, so that the circuit board 354 can be more stably coupled.

Referring to FIGS. 19A to 19D together, in contrast to the electronic device 200 according to some embodiments (comparative embodiments), the electronic device 300 including the socket module 350 and the circuit board 354 does not require separate processing to form a recess. In the electronic device 300 according an embodiment of the disclosure, the through hole 305 may have a first depth D1 substantially the same as the first width W1 of the side member 321. Therefore, the side member 321 of the electronic device 300 may have a larger thickness around the through hole 305. This may increase the rigidity of the electronic device 300. The electronic device 300 does not require a separate socket support member as the socket module 350 is prevented from being pushed or removed during the process of inserting the conductive pin into the socket module 350. In addition, the electronic device 300 does not require a separate operation of bending the circuit board 354 by 90 degrees to have an "L" shape. In addition, the electronic device 300 has a structure in which the socket module 350 can be inserted from the outer surface 321a of the side member 321 (external insertion), which prevents the thorough hole 305 from being obscured during manual assembly, allowing for easy assembly. As a result, incorrect assembly of the socket module 350 can be prevented. In addition, in the electronic device 400, since the circuit board 354 is inserted vertically rather than obliquely in the process of being mounted, the space between the socket module 350 and the anti-slip rib 324 may be significantly smaller than that in the electronic device 200 of FIGS. 5 to 12. That is, in an embodiment of the present disclosure, the length L2 between the socket module 350 and the anti-slip rib 324 may be shorter than the length L1 between the socket module 250 and the anti-slip rib 224 of the electronic device 200 according to the comparative embodiments of FIGS. 5 to 12.

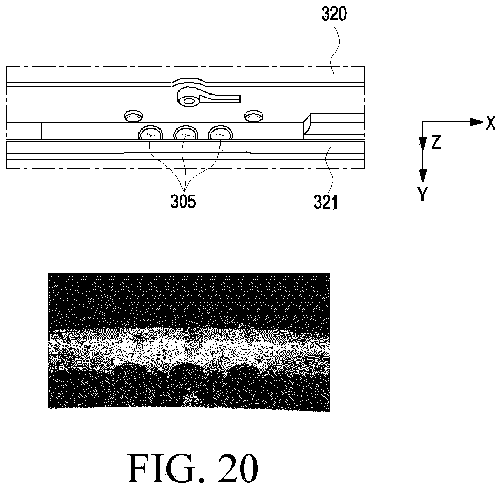

FIG. 20 is a view illustrating the amount of deformation when a load is applied to the through holes 305 in the electronic device 300 and their surroundings, according to an embodiment of the disclosure.

According to an embodiment, the electronic device 300 may undergo deformation to be partially bent when subjected to a load, as observed in FIGS. 3B and 3C. In particular, a greater deformation may occur in the side member 321 around the through holes 305. For example, FIG. 20 illustrates the level of the strain when a load of about 20 kgf is applied to the electronic device 300. As illustrated, it may be confirmed that the strain is concentrated in the side member 321 around the through holes 305. However, compared to the embodiment of FIG. 12, it may be confirmed that the amount of deformation is reduced in the embodiment of FIG. 20. For example, when a load of about 20 kgf is applied to the electronic device 300, the amount of deformation of the side member 321 around the through holes 305 was measured to be about 28.8 mε. Meanwhile, the amount of deformation of the side member 221 around the through holes 205 in the electronic device according to the comparative embodiment of FIG. 12 was measured to be about 30.2 mε. That is, according to an embodiment of the disclosure, it may be confirmed that the amount of deformation is reduced by about 4.6% compared to the comparative embodiment of FIG. 12.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, it is possible to provide an electronic device (e.g., the electronic device 300) of FIG. 13). The electronic device 300 may include a housing including a first plate (e.g., the first plate 302 in FIG. 13), a side member (e.g., the side member 321 in FIG. 13) having a thickness of a first width (e.g., the first width W1 in FIG. 13), a seating portion (e.g., the seating portion 322 in FIG. 13) as a portion of the side member configured to seat an edge of the first plate thereon, and a through hole (e.g., the through hole 305 in FIG. 13) formed to penetrate a predetermined area of the side member from an outer surface (e.g., the outer surface 321a in FIG. 13) toward an inner surface (e.g., the inner surface 321b in FIG. 13) and having a first depth (e.g., the first depth D1 in FIG. 13) substantially equal to the first width, a socket module including a conductive socket (e.g., the conductive socket 351 in FIG. 13) inserted into the through hole and comprising a first surface (e.g., the first surface 351a in FIG. 13) exposed outside the housing and a second surface (e.g., the second surface 351b in FIG. 13) opposite to the first surface and exposed inside the housing, and an elastic member (e.g., the elastic member 352 in FIG. 13) disposed to surround a periphery of the second surface of the conductive socket to be in contact with the periphery of the through hole on the inner surface, and a circuit board (e.g., the circuit board 354 in FIG. 13) on which a conductive contact member (e.g., the conductive contact member 355 in FIG. 13) is disposed. The circuit board is disposed such that the conductive contact member is in contact with the second surface of the conductive socket to be electrically connected to the circuit board.

According to an embodiment, the side member may include a metal material.

According to an embodiment, the housing may include a second plate (e.g., the second plate 320 in FIG. 13) facing in a second direction opposite to a first direction (e.g., the Z-axis direction) in which the first plate is oriented, and the side member and the second plate may be integrally formed.

According to an embodiment, the outer surface of the side member may face in a third direction (e.g., the Y-axis direction in FIG. 13) different from the first direction and the second direction.

According to an embodiment, the first plate may have a rectangular shape including a long side edge and a short side edge when viewed from above.

According to an embodiment, the predetermined area may be located in a central portion of the long side edge.

According to an embodiment, the through hole may be formed in a tapered shape with a diameter that decreases symmetrically about an imaginary line drawn from the outer surface to the inner surface.

According to an embodiment, the socket module may be inserted and coupled into the through hole in a direction oriented from the outer surface toward the inner surface.

According to an embodiment, the conductive contact member may be a c-clip or a conductive sponge.

According to an embodiment, the elastic member may be made of a urethane material.

According to an embodiment, the circuit board may be disposed at the same height as the second surface of the conductive socket.

According to an embodiment, the conductive contact member may be disposed at one end of the circuit board, and the circuit board may support the conductive contact member such that the second surface of the conductive socket is configured to be pressed by the conductive contact member in a direction oriented from the inner surface toward the outer surface.

According to an embodiment, the circuit board may be assembled inside the housing in a direction opposite to the direction in which the first plate faces to implement contact between the conductive socket and the conductive contact member.

According to an embodiment, the housing may include at least one protrusion (e.g., the protrusion 325 in FIG. 17) configured to be fastened to an opening in the circuit board.

According to an embodiment, the housing may include a non-conductive member (e.g., the non-conductive member 305 in FIG. 13) that, when the conductive socket is inserted into the through hole, surrounds the conductive socket for insulation between the conductive socket and the housing.

According to an embodiment of the disclosure, it is possible to provide an electronic device (e.g., the electronic device 300 in FIG. 13). The electronic device 300 may include a housing including a first plate (e.g., the first plate 302 of FIG. 13) oriented in a first direction (e.g., the Z-axis direction of FIG. 13), a second plate (e.g., the second plate 320 in FIG. 13) oriented in a second direction opposite to the first direction, a side member (e.g., the side member 321 in FIG. 13) surrounding the space between the first plate and the second plate, the side member including an outer surface oriented in a third direction (e.g., the Y-axis direction in FIG. 13) perpendicular to the first direction and the second direction, and an inner surface opposite to the outer surface, and having a thickness of a first width (e.g., the first width W1 in FIG. 13) between the outer surface and the inner surface, a seating portion (e.g., the seating portion 322 in FIG. 13) as a portion of the side member configured to seat an edge of the plate thereon, and a through hole (e.g., the through hole 305 in FIG. 13) formed to penetrate a predetermined area of the side member from an outer surface (e.g., the outer surface 321a in FIG. 13) toward an inner surface (e.g., an inner surface (321b) of FIG. 13) and having a first depth (e.g., the first depth D1 in FIG. 13) substantially equal to the first width, a socket module (e.g., the socket module 350 in FIG. 13) including a conductive socket (e.g., the conductive socket 351 in FIG. 13) inserted into the through hole and comprising a first surface (e.g., the first surface 351a in FIG. 13) exposed outside the housing and a second surface (e.g., the second surface 351b in FIG. 13) opposite to the first surface and exposed inside the housing, and an elastic member (e.g., the elastic member 352 in FIG. 13) disposed to surround a periphery of the second surface of the conductive socket to be in contact with the periphery of the through hole on the inner surface, and a circuit board (e.g., the circuit board 354 in FIG. 13) having one end at which a conductive contact member (e.g., the conductive contact member 355 in FIG. 13) is disposed. The circuit board may support the conductive contact member such that the conductive contact member is configured to be pressed against the second surface of the conductive socket in a direction from the inner surface toward the outer surface.

**In** the detailed description of the embodiments of the disclosure, specific embodiments have been described. However, it will be evident to a person ordinarily skilled in the art that various modification can be made without departing from the gist of the disclosure. It will be apparent to those skilled in the art that various changes in form and detail may be made without departing from the overall scope of the disclosure, including the appended claims and their equivalents.

## Claims

1. An electronic device comprising:
a housing comprising a first plate, a side member having a thickness of a first width, a seating portion as a portion of the side member configured to seat an edge of the first plate thereon, and a through hole formed to penetrate a predetermined area of the side member from an outer surface toward an inner surface and having a first depth substantially equal to the first width;
a socket module comprising a conductive socket inserted into the through hole and comprising a first surface exposed outside the housing and a second surface opposite to the first surface and exposed inside the housing, and an elastic member disposed to surround a periphery of the second surface of the conductive socket to be in contact with the periphery of the through hole on the inner surface; and
a circuit board on which a conductive contact member is disposed, wherein the circuit board is disposed such that the conductive contact member is in contact with the second surface of the conductive socket to be electrically connected to the circuit board.

2. The electronic device of claim 1, wherein the side member comprises a metal material.

3. The electronic device of claim 1, wherein the housing comprises a second plate facing in a second direction opposite to a first direction in which the first plate faces, and the side member and the second plate are integrally formed.

4. The electronic device of claim 3, wherein the outer surface of the side member faces in a third direction different from the first direction and the second direction.

5. The electronic device of claim 1, wherein the first plate has a rectangular shape including a long side edge and a short side edge when viewed from above.

6. The electronic device of claim 1, wherein the predetermined area is located on a central portion of the long side edge.

7. The electronic device of claim 1, wherein the through hole is formed in a tapered shape with a diameter that decreases symmetrically about an imaginary line drawn from the outer surface to the inner surface.

8. The electronic device of claim 1, wherein the socket module is inserted and coupled into the through hole in a direction oriented from the outer surface toward the inner surface.

9. The electronic device of claim 1, wherein the conductive contact member is a c-clip or a conductive sponge.

10. The electronic device of claim 1, wherein the elastic member comprises a urethane material.

11. The electronic device of claim 1, wherein the circuit board is disposed at a same height as the second surface of the conductive socket.

12. The electronic device of claim 1, wherein the conductive contact member is disposed at one end of the circuit board, and
wherein the circuit board supports the conductive contact member such that the second surface of the conductive socket is configured to be pressed by the conductive contact member in a direction oriented from the inner surface toward the outer surface.

13. The electronic device of claim 1, wherein the circuit board is assembled inside the housing in a direction opposite to the direction in which the first plate faces to implement contact between the conductive socket and the conductive contact member.

14. The electronic device of claim 1, wherein the housing comprises at least one protrusion configured to be fastened to an opening in the circuit board.

15. The electronic device of claim 1, wherein the housing comprises a non-conductive member that, when the conductive socket is inserted into the through hole, surrounds the conductive socket for insulation between the conductive socket and the housing.
